# FASCICULE DE BREVET EUROPEEN

(11) **EP 1 925 055 B1**
(45) Date de publication et mention de la délivrance du brevet: **27.03.2019**
(21) Numéro de dépôt: 06808320.3
(22) Date de dépôt: 13.09.2006
(51) Int. Cl.: H01M 10/42, H01M 10/625, H01M 10/6563, H01M 10/6556, H01M 10/6551, H01M 10/6567, H01M 10/6566, H01M 10/613, H01M 10/659, B60L 3/00, B60L 11/18, H01M 10/46, H01M 2/10

(54) **DISPOSITIF COMPACT D'ALIMENTATION ELECTRIQUE POUR UN VEHICULE AUTOMOBILE**
KOMPAKTE STROMVERSORGUNGSVORRICHTUNG FÜR KRAFTWAGEN
COMPACT ELECTRIC POWER SUPPLY DEVICE FOR A MOTOR VEHICLE

(30) Priorité: 13.09.2005 FR 0509359
(43) Date de publication de la demande: 28.05.2008
(73) Titulaire: VALEO EQUIPEMENTS ELECTRIQUES MOTEUR, 94046 Créteil (FR)
(72) Inventeur: ABADIA, Roger, F-93360 Neuilly-plaisance (FR); RICHARD, Daniel, F-91800 Boussy Saint Antoine (FR); DOFFIN, Hugues, F-94000 Creteil (FR); MASFARAUD, Julien, F-75010 Paris (FR); TELLIER, Richard, F-75011 Paris (FR); TREGUER, Matthieu, F-94700 Maisons Alfort (FR); TASPINAR, Ertugrul, F-01400 Chatillon-sur-chalaronne (FR); PICOD, Christophe, F-91190 Gif Sur Yvette (FR)
(74) Mandataire: Gamonal, Didier
(86) Numéro de dépôt international: PCT/FR2006/050882
(87) Numéro de publication internationale: WO 2007/031689

(56) Documents cités:
- US-A- 6 094 927
- US-B1- 6 541 942

## Description

### Domaine de l'invention

L'invention concerne un dispositif d'alimentation électrique pour un véhicule automobile.

L'invention concerne plus particulièrement un dispositif d'alimentation électrique pour un véhicule automobile, qui est destiné à relier au moins une machine électrique, susceptible de fonctionner en moteur électrique et/ou en générateur électrique, à une batterie du véhicule, et qui comporte au moins un convertisseur électronique.

### Etat de la technique

On connaît de nombreux exemples de dispositifs de ce type.

De tels dispositifs d'alimentation électrique sont par exemple utilisés pour l'alimentation de machines électriques de véhicules automobiles de type électrique et/ou hybride, c'est à dire combinant une machine électrique et un moteur thermique conventionnel, pour lesquels il est important de pouvoir récupérer l'énergie cinétique afin de recharger la batterie du véhicule et d'approvisionner le réseau de bord en puissance électrique. Cette fonction est couramment appelée freinage récupératif. Une batterie de type métal hydrure est par exemple utilisée.

Ces dispositifs d'alimentation électrique posent toutefois de nombreux problèmes.

En effet, les unités de stockage d'énergie subissent de nombreux cycles de charge et de décharge. Par exemple, lorsque le véhicule automobile démarre, il se produit une décharge d'électricité très intense. Par exemple encore, les unités de stockage sont chargées avec un courant électrique de forte intensité lors des périodes de freinage récupératif.

Lorsque du courant électrique est libéré, lors des opérations de décharge, ou stocké, lors des opérations de charge, les unités de stockage dégagent de la chaleur. La quantité de chaleur dégagée est proportionnelle à l'intensité du courant électrique qui circule en charge ou en décharge.

De plus, ces cycles de charge et de décharge sont susceptibles de se succéder à un rythme très élevé, notamment lorsque le véhicule roule en ville et que le conducteur est amené à arrêter et à redémarrer fréquemment le véhicule.

Or, pour que les unités de stockage puissent stocker efficacement le courant électrique, elles doivent être maintenues dans une plage de températures de fonctionnement qui est bornée par une température maximale de fonctionnement et par une température minimale de fonctionnement.

Lorsque les cycles de charge et de décharge s'enchaînent rapidement, la température des unités de stockage est susceptible de monter très vite au-delà de la température maximale de fonctionnement. La montée en température des unités de stockage est d'autant plus rapide que les unités de stockage sont agencées dans un bac fermé. US6094927 décrit un dispositif d'alimentation pour véhicule automobile comportant un boîtier.

### Objet de l'invention

Pour remédier à tous ces inconvénients, l'invention propose un dispositif d'alimentation électrique pour un véhicule automobile du type décrit précédemment et monté dans ledit véhicule automobile, caractérisé en ce qu'il comporte un boîtier unique comportant des moyens de refroidissement et comprenant une partie inférieure formant un bac de réception d'au moins une unité de stockage d'énergie électrique.

Grâce à l'invention l'unité de stockage d'énergie est bien refroidie.

En outre grâce aux moyens de refroidissement on peut pallier d'autres inconvénients

En effet les différents éléments qui composent ces dispositifs d'alimentation, comme le convertisseur électronique tel qu'un onduleur et la batterie, sont généralement répartis à différents emplacements du véhicule et ils sont reliés entre eux par des câbles de connexion.

Ces connexions distantes ont pour conséquence l'apparition d'inductances de liaison, notamment entre l'onduleur et la batterie, qui produisent des ondulations de tension et de résonance entre les différents éléments et des décalages de masse pour les signaux à communiquer entre les différents équipements.

Par ailleurs, ces connexions distantes posent aussi le problème du filtrage des parasites.

Pour remédier à ces inconvénients il est proposé que le boîtier unique regroupe tous les éléments qui compose le dispositif d'alimentation électrique.

Ainsi il est proposé que le dispositif d'alimentation électrique comporte le boîtier unique comprenant des moyens de refroidissement et dans lequel sont agencés au moins le(s) convertisseur(s) électronique(s) et au moins une unité de stockage d'énergie électrique.

Ainsi, l'unité de stockage d'énergie va remplacer la batterie pour faire du freinage récupératif. On ne se soucie donc plus de l'inductance de liaison entre la batterie et l'onduleur. Et de plus, le fait de regrouper tous les éléments du dispositif d'alimentation, dans un boîtier unique avec l'unité de stockage permet de réduire les inductances de liaison qui existent entre ladite unité et le ou les convertisseurs électroniques, tout en assurant un refroidissement groupé de(s) convertisseurs électronique(s) et de(s) unité(s) de stockage d'énergie électrique.

Selon d'autres caractéristiques non limitatives de l'invention prises isolément ou en combinaison:
le boîtier comporte :
- une partie inférieure, formant un bac de réception d'une pluralité d'unités de stockage d'énergie électrique,
- au moins une partie supérieure, coiffant la partie inférieure, chaque partie inférieure ou supérieure comportant des moyens de refroidissement associés.
- la partie supérieure reçoit au moins une carte électronique de commande et au moins une carte électronique de puissance qui comporte le(s) convertisseur(s) électronique(s),

Cela permet un assemblage facilité et une bonne compacité du dispositif.
- la partie inférieure présente la forme d'un premier bac sensiblement parallélépipédique, ouvert à son extrémité supérieure, qui reçoit dans le sens de la longueur ou bien de la largeur ou bien de la hauteur au moins deux unités de stockage d'énergie électrique dits "supercondensateurs" montées en série, et qui comporte des moyens inférieurs de refroidissement.
- Les unités de stockage d'énergie sont disposées en étages, les unités d'un premier étage étant décalées par rapport au deuxième étage telle que deux unités du deuxième étage sont en contact tangentiel avec une même unité du premier étage.
- la partie supérieure comporte un second bac qui coiffe l'extrémité supérieure du premier bac, qui est ouvert à son extrémité supérieure, et qui est destiné à recevoir successivement, du bas vers le haut du second bac, la carte électronique de commande, un joint d'isolation, et la carte électronique de puissance comportant le convertisseur électronique, et un couvercle qui coiffe l'extrémité supérieure du second bac et qui comporte des moyens supérieurs de refroidissement,

Cela permet un bon refroidissement du dispositif pendant son fonctionnement.
- les moyens inférieurs/supérieurs de refroidissement d'au moins une partie inférieure/supérieure sont des moyens de refroidissement par fluide.
- les unités de stockage d'énergie électrique sont noyées dans un matériau thermorégulateur tel que notamment de la paraffine
- pour former les moyens inférieurs de refroidissement, le premier bac de la partie inférieure comporte des parois longitudinales, dans l'épaisseur desquelles sont agencés une pluralité de conduits longitudinaux destinés à être traversés par un fluide de refroidissement, et des parois transversales dans l'épaisseur de chacune desquelles est formée une cavité qui communique au moins :
   - avec l'ensemble des extrémités associées des conduits des parois longitudinales,
   - avec un premier conduit associé d'alimentation ou bien d'évacuation du fluide de refroidissement dont une buse fait saillie sur la face extérieure de chaque paroi transversale,
- pour former les moyens de refroidissement supérieurs, le couvercle de la partie supérieure comporte dans son épaisseur une cavité longitudinale et transversale qui est destinée à être traversée par le fluide de refroidissement, et qui communique à ses extrémités avec des deuxièmes conduits associés d'alimentation et d'évacuation du fluide de refroidissement,
- chaque cavité de chaque paroi transversale du premier bac de la partie inférieure communique avec un troisième conduit qui communique avec le deuxième conduit associé du couvercle de la partie supérieure, pour permettre une alimentation et une évacuation unique des conduits de la partie inférieure et de la cavité du couvercle par l'intermédiaire des buses de la partie inférieure.
- le troisième conduit communique avec le deuxième conduit par l'intermédiaire d'un tube,
- le tube est indépendant et il est reçu d'une part directement dans un alésage du premier bac formant le troisième conduit et d'autre part dans un manchon en matériau élastomère reçu dans un alésage du couvercle formant le deuxième conduit notamment pour assurer l'étanchéité au fluide de refroidissement sous pression,
- les moyens de refroidissement inférieurs/supérieurs d'au moins une partie inférieure/supérieure sont des moyens de refroidissement à air,

Cela facilite l'intégration du dispositif (pas de raccordement à un circuit de refroidissement spécifique tel qu'un circuit de refroidissement du véhicule)
- pour former les moyens de refroidissement inférieurs, le premier bac de la partie inférieure comporte des parois transversales opposées qui comportent chacune un passage d'air, les passages d'airs opposés permettant à un flux d'air de traverser le bac pour refroidir les unités de stockage d'énergie montées en série, et au moins un passage d'air d'une des parois transversales est composé d'une ouverture pratiquée dans ladite paroi transversale à laquelle est abouchée une cloche de circulation d'air dont une cavité interne reçoit intérieurement au moins un motoventilateur et dont un conduit externe est destiné à être relié à un conduit d'arrivée d'air frais du véhicule associé,
- pour former les moyens de refroidissement supérieurs, le couvercle du second bac de la partie supérieure comporte une pluralité d'ailettes et au moins un bord de la cavité interne de la cloche de circulation fait saillie au niveau de l'extrémité supérieure des ailettes pour permettre à un flux d'air de traverser au moins partiellement les ailettes,

Cela permet de maximiser la surface d'échange dans un volume restreint afin d'optimiser la dissipation thermique.
- un volet faisant saillie horizontale à partir du second bac s'étend à l'intérieur de la cavité de la cloche de circulation pour guider l'air entre le motoventilateur et les ailettes,
- seul un des passages d'air des parois transversales reçoit une cloche de circulation d'air et la paroi transversale opposée comporte une grille d'évacuation d'air,
- les deux passages d'air des parois transversales opposées sont composés chacun d'une ouverture à laquelle est abouchée une cloche de circulation d'air qui est munie d'au moins un motoventilateur respectivement soufflant ou aspirant, un bord de la cavité interne de chaque cloche s'étendant en regard des ailettes et un conduit externe étant destiné à être relié à un conduit d'arrivée d'air frais ou d'évacuation d'air chaud du véhicule associé pour alimenter ou évacuer l'air dans le bac inférieur et entre les ailettes,
- une paroi de guidage s'étend au dessus des extrémités des ailettes pour guider le flux d'air entre les ailettes,
- le boîtier comporte deux convertisseurs électroniques.
- au moins un convertisseur électronique est un onduleur.

Cela permet de réduire les inductances de liaison entre l'onduleur et les unités de stockage. De plus, cela permet d'éviter d'avoir des perturbations dans le dispositif d'alimentation et sur le réseau de bord du véhicule si l'onduleur est un onduleur à technologie de découpage appelé MLI (modulation par largeur d'impulsion) ou PWM en anglais.
- au moins un convertisseur électronique est un convertisseur continu-continu,

Cela permet de réduire les inductances de liaisons entre l'onduleur et ledit convertisseur.
- le boîtier comporte en outre un interrupteur bi-position,

Cela permet de réduire les inductances de liaison entre l'onduleur et l'unité de stockage d'énergie.
- le boîtier est notamment sensiblement de la taille d'une batterie standard de véhicule automobile,

Cela permet de mettre le boîtier à l'emplacement de la batterie classique, cette dernière pouvant par exemple être mise dans le coffre. Ainsi, cela permet d'intégrer machine électrique et dispositif d'alimentation électrique au plus près ce qui réduit les longueurs de câblage qui les relie.
- le boîtier est réalisé par moulage d'un alliage d'aluminium.

### Brève description des dessins

D'autres caractéristiques et avantages apparaîtront au cours de la lecture de la description détaillée qui va suivre pour la compréhension de laquelle on se reportera aux dessins en annexe parmi lesquels :
- la figure 1 est un schéma de principe d'un dispositif d'alimentation électrique selon l'invention,
- la figure 2 est une vue éclatée en perspective d'un premier mode de réalisation d'un dispositif d'alimentation électrique selon l'invention,
- la figure 3 est une vue en coupe par le plan 3-3 de la figure 2 du dispositif de la figure 2.
- la figure 4 est une vue en coupe par le plan 4-4 de la figure 2 du dispositif de la figure 2.
- la figure 5 est une vue éclatée en perspective d'un second mode de réalisation d'un dispositif d'alimentation électrique selon l'invention,
- la figure 6 est une vue en coupe par le plan 6-6 de la figure 5 du dispositif de la figure 5.
- la figure 7 est une vue en coupe par le plan 7-7 de la figure 5 du dispositif de la figure 5.
- la figure 8 est une vue en coupe par le plan 7-7 de la figure 5 d'un dispositif en variante du second mode de réalisation du dispositif de la figure 5.

### Description d'exemples de réalisation

Dans la description qui va suivre, des chiffres de référence identiques désignent des pièces identiques ou ayant des fonctions similaires.

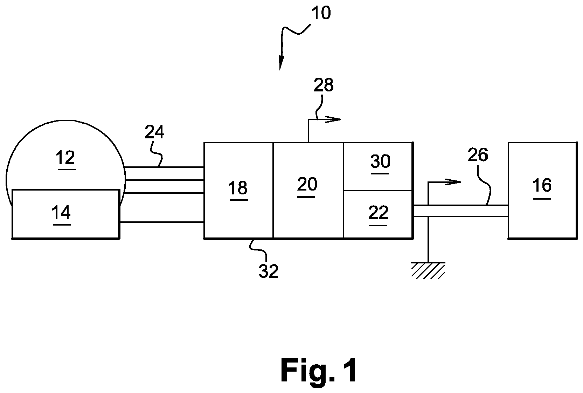

On a représenté à la figure 1 l'ensemble d'un dispositif 10 d'alimentation électrique pour un véhicule automobile réalisé conformément à l'invention.

Le dispositif 10 est destiné à relier au moins une machine électrique 12 munie de capteurs 14, susceptible de fonctionner en moteur électrique, par exemple pour entraîner au moins une roue du véhicule et/ou en générateur électrique, par exemple pour récupérer l'énergie cinétique du véhicule lors d'un freinage, à une batterie 16 du véhicule. Cette machine, telle qu'un alterno-démarreur, est dite réversible. Cette machine est prise comme exemple non limitatif pour la suite de la description.
Pour mémoire on rappellera qu'un alterno-démarreur est un alternateur réversible permettant, d'une part, de transformer de l'énergie mécanique en énergie électrique lorsqu'il fonctionne en mode générateur électrique pour notamment recharger une batterie et /ou alimenter les consommateurs d'au moins un réseau de bord du véhicule automobile et d'autre part, de transformer de l'énergie électrique en énergie mécanique lorsqu'il fonctionne en mode moteur électrique, dit mode démarreur, pour notamment démarrer le moteur à combustion interne ou moteur thermique du véhicule automobile et, dans un mode de réalisation, éviter que le moteur thermique cale.
Cet alterno-démarreur comporte des moyens de redressement de courant appelés onduleur comportant par exemple des transistors du type MOSFET pilotés par une unité électronique de commande et de contrôle comme décrit par exemple dans les documents FR A 2 745 444 et FR A 2 745 445.

Cette unité électronique de commande et de contrôle reçoit des signaux provenant de capteurs de la position angulaire du rotor de la machine et comporte également des pilotes, dits drivers, qui sont des éléments de puissance et qui commandent les transistors du type MOSFET. Ces pilotes, dans un mode de réalisation, appartiennent à un étage de puissance comprenant également les transistors du type MOSFET de l'onduleur constituant un convertisseur électrique réversible de courant alternatif -continu dit « AC/DC » en mode générateur électrique. En mode moteur électrique les transistors MOSFET de l'onduleur sont pilotés en tout ou rien pour commander en pleine onde les enroulements du stator de la machine ou en variante par une commande à largeurs d'impulsions variables, c'est à dire une technologie de découpage appelé MLI (modulation par largeur d'impulsion) ou PWM en anglais.

Les éléments de contrôle appartiennent à un étage de contrôle de plus faible puissance.
Dans un mode de réalisation l'étage de puissance comprend une carte électronique de puissance portant les éléments de puissance, tels que les transistors du type MOSFET et les drivers, et l'étage de contrôle comprend une carte électronique de commande portant les éléments de contrôle. Dans ces documents précités l'alterno-démarreur est polyphasé et appartient à un agencement pour véhicule automobile comportant au moins deux unités de stockage d'énergie électrique. L'une de ces unités de stockage est une batterie et l'autre un super condensateur c'est-à-dire une capacité de grande valeur appelée Ultra capacité. On notera qu'en mode démarreur (fonctionnement en mode moteur électrique) l'agencement permet d'alimenter l'alterno-démarreur avec une tension supérieure à celle en mode générateur.
Ce type d'agencement permet de récupérer de l'énergie lors du freinage et comporte deux réseaux électrique de distribution, au moins un commutateur ou un circuit à deux interrupteurs et un convertisseur continu-continu, dit convertisseur DC/DC, permettant de convertir des tensions et de fonctionner à deux tensions différentes.
Pour plus de précisions on se reportera à ces documents sachant que l'onduleur est un convertisseur électronique de courant.
Bien entendu, l'agencement peut faire appel à une machine électrique tournante telle qu'un alternateur simple relié électriquement à une batterie.
Dans un mode de réalisation cet alternateur est associé à un démarreur monté en parallèle avec l'alternateur entre une première borne reliée à la masse et une deuxième borne relié à un circuit permettant dans un mode de réalisation de mettre en série deux batteries, par exemple de 12V, pour alimenter le démarreur en 24V au démarrage et de mettre en parallèle ces deux batteries après le démarrage du véhicule automobile.
Le dispositif 10 comporte donc au moins un convertisseur électronique 18, 22, 30 et une unité 20 de stockage d'énergie électrique. Ce dispositif comporte deux réseaux électriques, l'un dédié à la puissance (les unités de stockage 20 étant en série et adapté à la récupération d'énergie, l'autre dédié à l'énergie pour notamment recharger la batterie 16 connecté au réseau de bord du véhicule et/ou alimenter ce réseau de bord.

Dans un premier mode de réalisation non limitatif, le dispositif 10 comporte un convertisseur continu-continu 22 de tension.

Dans un deuxième mode de réalisation non limitatif, le dispositif 10 comporte un onduleur 18. L'onduleur est un convertisseur réversible DC/AC. Il fonctionne en convertisseur AC/DC lorsque la machine est en mode générateur électrique (il est souvent appelé pont redresseur), et en convertisseur DC/AC lorsque la machine est en mode moteur électrique.

Dans un troisième mode de réalisation non limitatif, le dispositif 10 comporte un onduleur 18 et un convertisseur continu-continu 22.

Dans un quatrième mode de réalisation, dans l'exemple de réalisation non limitatif qui a été représenté à la figure 1, le dispositif 10 comporte trois convertisseurs électroniques, à savoir un onduleur 18, un convertisseur continu-continu 22, et en plus un interrupteur bi-position 30 ou deux interrupteurs, qui sont reliés entre eux par des connectiques de puissance tels que des bus barres (non représentés).

Dans un cinquième mode de réalisation le dispositif est dépourvu de convertisseur électronique, d'onduleur et de carte électronique, la partie supérieure 36 formant un simple couvercle

L'onduleur 18, de manière précitée, est un convertisseur électrique réversible de courant alternatif-continu dit "AC/DC" en mode générateur électrique ou continu alternatif dit "DC/AC" en mode moteur électrique.

Le convertisseur continu-continu 22 permet notamment de convertir une tension côté unité de stockage d'énergie 20, ladite tension se situant dans une plage de valeurs, ici de manière non limitative entre 6V et 35V, en une tension compatible avec celle de la batterie 16, la batterie alimentant un réseau de bord par exemple de l'ordre de 12 volts.

L'interrupteur bi-position 30, ou les deux interrupteurs, permet quand à lui de déterminer le mode de fonctionnement de la machine électrique 12.

Dans l'exemple pris, le mode générateur comprend deux phases : une phase dite alternateur, et une phase dite récupératrice d'énergie, le mode moteur comprend une phase de démarrage et d'assistance dynamique.

Le mode de fonctionnement de la machine avec un interrupteur bi-position est le suivant :
- l'interrupteur relie l'onduleur 18 et l'unité de stockage 20 dans le mode moteur, et dans la phase récupératrice d'énergie,
- l'interrupteur relie l'onduleur 18 et la batterie 16 dans la phase alternateur.
On notera que dans un autre mode de réalisation, il n'existe pas d'interrupteur.

Le dispositif 10 est à cet effet relié par des câbles 24 à la machine électrique, par des câbles 26 à la batterie, et par des câbles 28 à un réseau d'alimentation électrique du véhicule.

Le dispositif 10 permettant de récupérer l'énergie cinétique du véhicule à l'aide de la machine électrique, cette architecture est plus particulièrement connue sous le nom d'architecture "14+X".

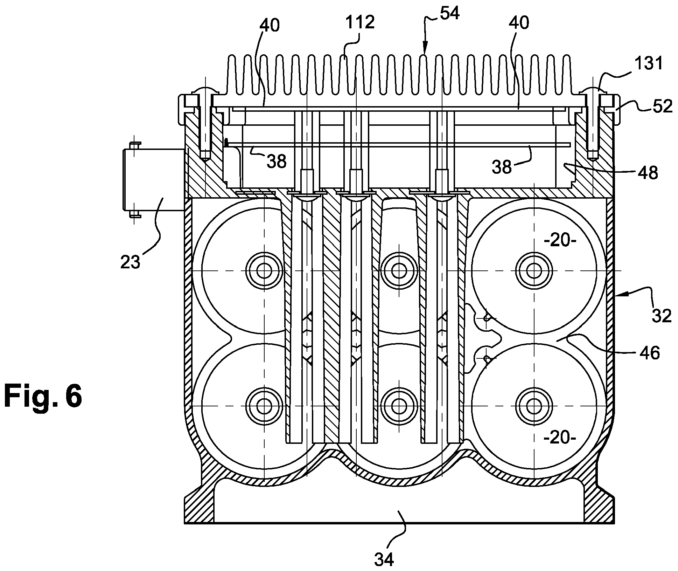

Comme l'illustrent les figures 1 à 8, le dispositif 10 est monté dans le véhicule automobile et comporte un boîtier unique 32, comportant des moyens de refroidissement, dans lequel sont agencés le(s) unité(s) 20 de stockage d'énergie.

Dans ce boîtier embarqué dans le véhicule sont également agencées le(s) convertisseur(s) électronique(s) 18, 22, 30 et électrique notamment pour :
- réduire les longueurs des connectiques entre ces éléments, de manière à limiter les effets des inductances de liaison,
- proposer un refroidissement groupé des convertisseurs électroniques 18, 22, 30 et de(s) unité(s) 20 de stockage d'énergie électrique.

D'une manière générale, le boîtier 32 comporte une partie inférieure 34, formant un bac 34 de réception d'une pluralité d'unités 20 de stockage d'énergie électrique.

Cette partie inférieure 34 est complétée par une au moins une partie supérieure 36, coiffant la partie inférieure 34, et recevant au moins une carte électronique de commande 38 et au moins une carte électronique de puissance 40 qui comporte les convertisseur(s) électronique(s) 18, 22, 30, c'est à dire l'onduleur 18, le convertisseur continu-continu 22, et l'interrupteur bi-position 30.

Suivant une caractéristique la partie inférieure 34 comporte des moyens de refroidissement pour refroidir au moins une unité de stockage d'énergie 20.

Préférentiellement, chaque partie inférieure 34 ou supérieure 36 comporte des moyens de refroidissement associés.

Plus particulièrement, la partie inférieure 34 présente la forme d'un premier bac sensiblement parallélépipédique, ouvert à son extrémité supérieure 42, qui reçoit au moins deux unités 20 de stockage d'énergie électrique dits "supercondensateurs" ou Ultra capacité montées en série.

Dans un premier exemple de réalisation non limitatif, les unités de stockage sont agencées dans le sens de la longueur.

Dans un deuxième mode de réalisation non limitatif, les unités de stockage sont agencées dans le sens de la largeur.

Dans un troisième mode de réalisation non limitatif, les unités de stockage sont agencées dans le sens de la hauteur.

Selon les dimensions des unités de stockage 20, on choisira la meilleure disposition des trois modes permettant d'optimiser la place nécessaire pour les composants électroniques intégrés dans le boîtier, ici dans l'exemple dans le sens de la hauteur.

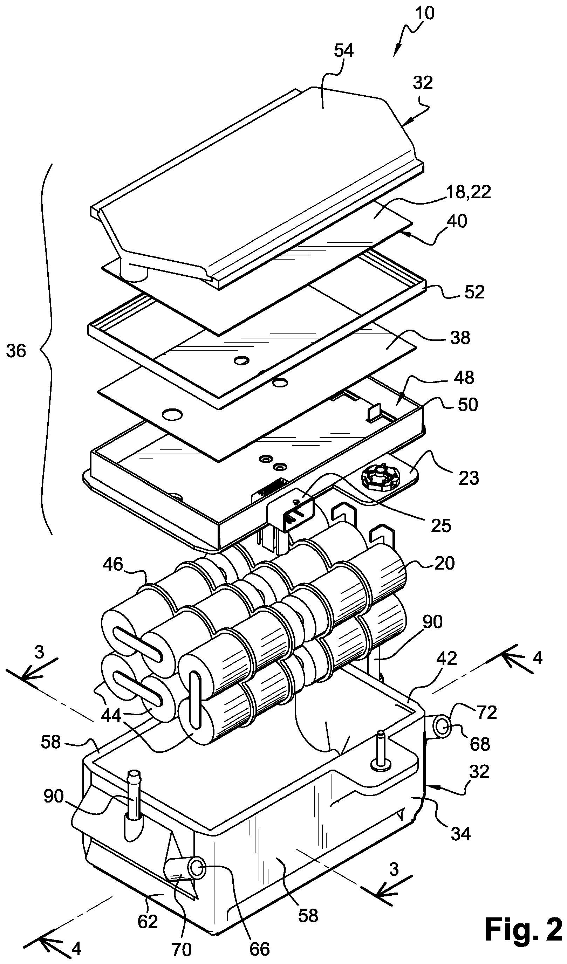

Dans une première variante applicable aux trois modes, les unités de stockage d'énergie 20 sont disposées en étages, les unités d'un premier étage étant décalées par rapport au deuxième étage telle que deux unités du deuxième étage sont en contact tangentiel avec une même unité du premier étage. Le contact peut être direct ou indirect.
Dans une deuxième variante applicable aux trois modes, telle qu'elle a été représentée sur les figures 2 à 8, la partie inférieure reçoit, des alignements axiaux 44 d'unités 20 de stockage d'énergie électrique qui sont agencés dans le sens de la longueur, mais cette disposition n'est pas limitative de l'invention. Les alignements 44 d'unités 20 de stockage d'énergie électrique pourraient en effet être agencés dans le sens de la largeur. Les unités de stockage d'énergie de deux alignements voisins sont maintenues par des moyens de maintien 46. Tout mode de réalisation de ces moyens de maintien peut convenir à la bonne mise en oeuvre de l'invention. Sur les figures, les moyens de maintien sont composés par des colliers élastiques 46, mais il pourrait s'agir de formes intégrées avec la partie inférieure 34, ou encore des unités 20 de stockage d'énergie électriques elles-mêmes, chacune de celles-ci comportant alors des moyens d'emboîtement destinés à coopérer avec l'unité 20 voisine.
Les unités 20 ont dans le mode de réalisation de la figure 2 une forme globalement cylindrique de section circulaire.
Bien entendu en variante ces unités 20 de forme allongée ont une autre section par exemple de forme polygonale, telle qu'une section hexagonale.
En variante la section est ovale.

Le premier bac de la partie inférieure 34 comporte selon une caractéristique des moyens inférieurs de refroidissement associés.

La partie supérieure 36, quand à elle, comporte un second bac 48 qui coiffe l'extrémité supérieure 42 du premier bac 34.

Ce second bac peut notamment être porteur de connecteurs externes, par exemple un connecteur 23 destiné à recevoir des signaux de commande et un connecteur 25 destiné à recevoir une alimentation en puissance électrique.

Le second bac 48 est ouvert à son extrémité supérieure 50, et il est destiné à recevoir successivement, préférentiellement, du bas vers le haut du bac 48, la carte électronique de commande 38, un joint d'isolation 52, et la carte électronique 40 de puissance comportant l'onduleur 18 et le convertisseur continu-continu 22, et un couvercle 54 qui coiffe l'extrémité supérieure 50 du second bac 48. Ce couvercle 54 comporte des moyens supérieurs de refroidissement. Préférentiellement, la carte de puissance 40 est disposée au plus proche des moyens supérieurs de refroidissement. Ainsi, cette disposition évite de réchauffer les unités de stockage 20 par la chaleur dégagée par la carte de puissance.

Selon un premier mode réalisation du boîtier 32 qui a été représenté aux figures 2 à 4, les moyens inférieurs/supérieurs de refroidissement d'au moins une partie inférieure 34 ou supérieure 36 sont des moyens de refroidissement par fluide, par exemple un liquide tel que de l'eau au glycol ou par un autre exemple, ou de l'air.

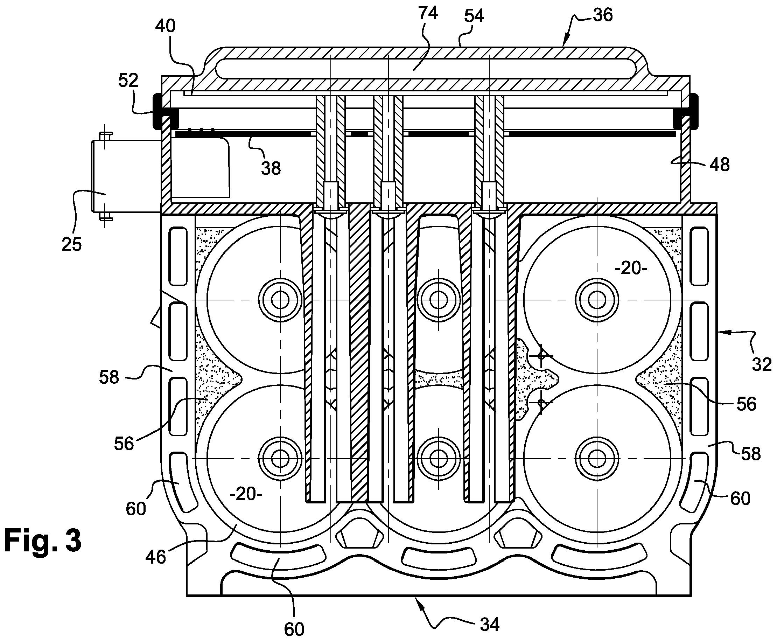

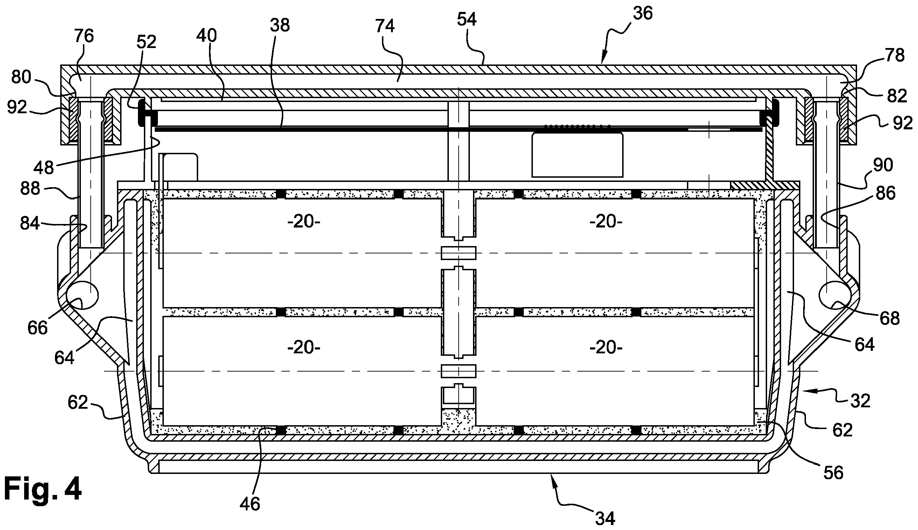

De plus, pour homogénéiser la température des unités de stockage 20, et pour améliorer l'échange thermique entre lesdites unités et les moyens de refroidissement de sorte à mieux dissiper la chaleur, comme l'illustrent plus particulièrement les figures 3 et 4, les unités 20 de stockage d'énergie électrique sont noyées suivant une caractéristique dans un matériau thermorégulateur 56 tel que notamment de la paraffine.

Ainsi, cela permet d'améliorer une meilleure conduction thermique vers les zones de circulation du fluide. En outre cela permet de mieux refroidir la machine électrique tournante dans le mode moteur électrique, notamment lorsque celle-ci est surexcitée dans la phase récupératrice d'énergie. De plus, cela permet d'améliorer l'étanchéité des unités de stockage 20.

Ici on utilise la chaleur latente du matériau thermo régulateur 56, tel que de la paraffine, résultant de son changement d'état (solide-liquide dans le cas de la paraffine) sans changement simultané de température. La paraffine, d'une manière générale le matériau thermo régulateur, sert donc à stocker la chaleur et à limiter les surchauffes autour d'une température variant faiblement. Ainsi à sa chaleur de changement d'état la paraffine se liquéfie en absorbant d'importantes quantités de chaleur latente qu'elle restitue ensuite lors de sa solidification lorsque la température baisse en dessous de cette température de changement d'état.

Cette baisse est provoquée notamment par les moyens inférieurs de refroidissement.

On évite ainsi les pics de température.

Bien entendu on peut utiliser, dans un autre mode de réalisation, un autre matériau ayant ces propriétés. Par exemple on peut utiliser une substance liquide du type aqueux qui passe de l'état liquide à l'état de gaz.

Pour former les moyens inférieurs de refroidissement, le premier bac de la partie inférieure 34 comporte (figure 3) des parois 58 verticales et horizontales, dans l'épaisseur desquelles sont agencés une pluralité de conduits 60 longitudinaux positionnés de manière à optimiser le coefficient d'échange thermique destinés à être traversés par le fluide de refroidissement. Dans l'exemple, les conduits sont parallèles.

Le premier bac de la partie inférieure 34 comporte aussi des parois transversales verticales 62 (figure 4) dans l'épaisseur de chacune desquelles est formée une cavité 64 qui communique au moins :
- avec l'ensemble des extrémités associées des conduits 60 des parois 58 longitudinales verticales/horizontales,
- avec un premier conduit 66 associé d'alimentation ou bien un premier conduit 68 d'évacuation du fluide de refroidissement dont une buse associée 70, 72 fait saillie, comme l'illustre la figure 2, sur la face extérieure de chaque paroi transversale 62.

Par ailleurs, comme l'illustre la figure 4, pour former les moyens de refroidissement supérieurs, le couvercle 54 de la partie supérieure 36 comporte dans son épaisseur une cavité 74 longitudinale et transversale qui est destinée à être traversée par le fluide de refroidissement, et qui communique à ses extrémités 76, 78 avec des deuxièmes conduits 80, 82 associés d'alimentation et d'évacuation du fluide de refroidissement.

L'alimentation et l'évacuation en fluide de refroidissement des parties inférieure 34 et supérieure 36 pourrait être indépendante. Toutefois, dans le mode de réalisation préféré de l'invention, ces deux parties 34, 36 sont alimentées de manière commune.

A cet effet, comme l'illustre la figure 4, chaque cavité 64 de chaque paroi transversale du premier bac de la partie inférieure 34 communique avec un troisième conduit associé 84, 86 qui communique avec le deuxième conduit associé 80, 82 du couvercle 54 de la partie supérieure 36, pour permettre une alimentation et une évacuation unique des conduits 60 de la partie inférieure 34 et de la cavité 74 du couvercle 54 par l'intermédiaire des buses 70, 72 de la partie inférieure 34.

Tout mode de mise en communication des deuxième conduit 80 et troisième conduit 84 d'une part, des deuxième conduit 82 et troisième conduit 86 d'autre part peuvent être envisagés sans changer la nature de l'invention.

Toutefois, de préférence, chaque troisième conduit 84, 86 communique avec le second conduit 80, 82 associé par l'intermédiaire d'un tube associé 90, 88.

Chaque tube 90, 88 pourrait être venu de matière avec le couvercle 54 ou avec la partie inférieure 34. Toutefois, pour faciliter l'ajustement de ces éléments compte tenu des dispersions dimensionnelles de fabrication, chaque tube 90, 88 est indépendant.

Plus particulièrement comme l'illustre la figure 4, chaque tube 90, 88 est préférentiellement reçu d'une part directement dans un alésage associé du premier bac 34 formant le troisième conduit 84, 86 et d'autre part dans un manchon associé 92 en matériau élastomère qui est reçu dans un alésage du couvercle 54 formant le deuxième conduit 80, 82.

Cette configuration permet notamment d'assurer une parfaite étanchéité au fluide de refroidissement sous pression.

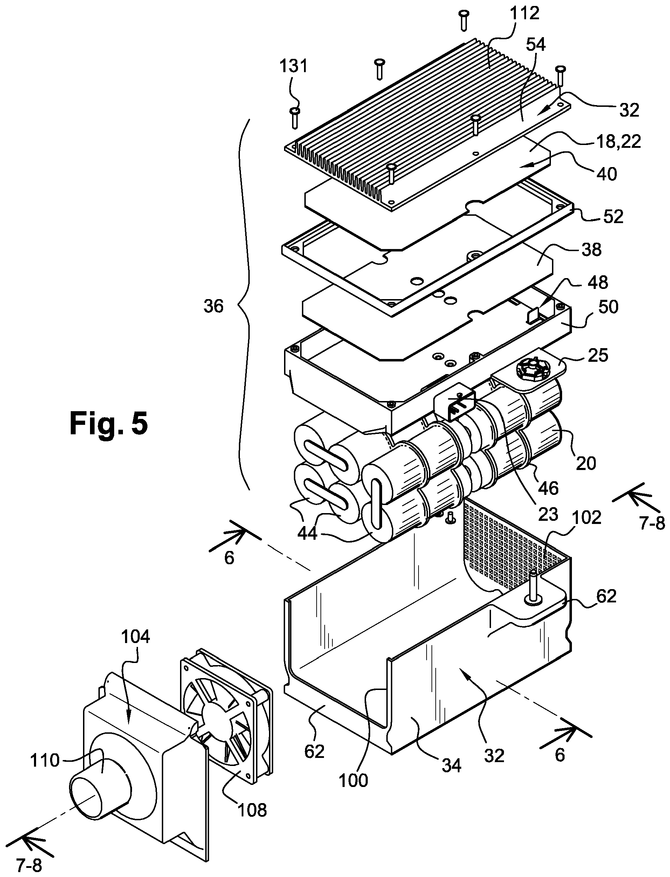

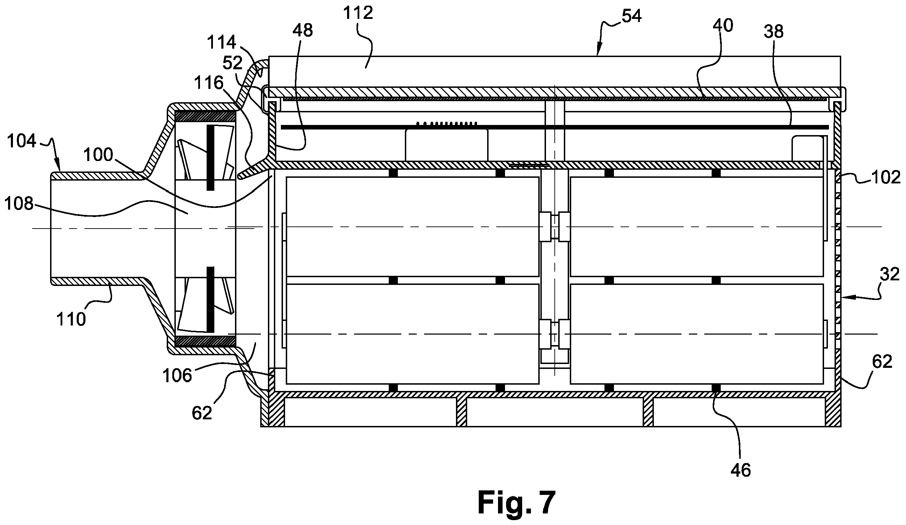

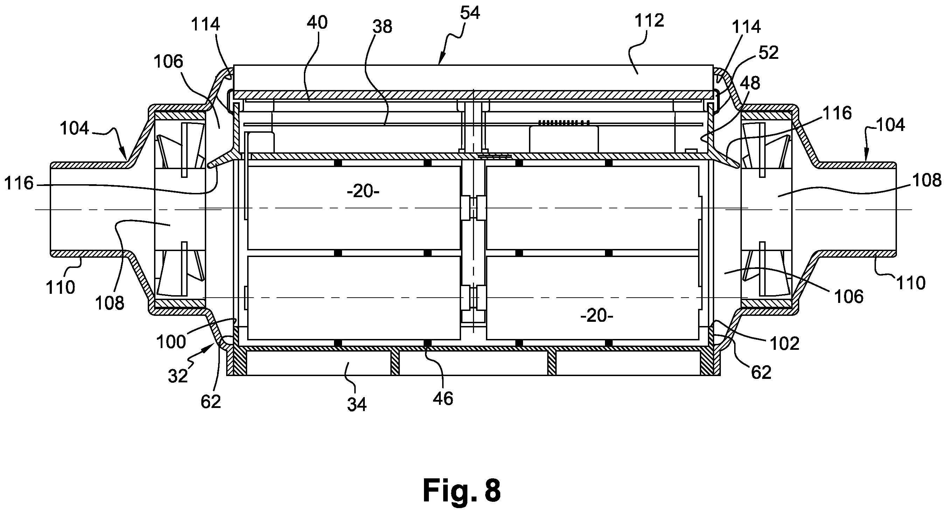

Selon un second mode de réalisation qui a été représenté aux figures 5 à 8 les moyens de refroidissement inférieurs/supérieurs d'au moins une partie inférieure 34 ou supérieure 36 sont des moyens de refroidissement à air. Ces moyens comportent un motoventilateur 108 monté dans une cloche 104 (figure 7 et 8)

A cet effet, pour former les moyens de refroidissement inférieurs, le premier bac de la partie inférieure 34 comporte des parois transversales verticales opposées 62 qui comportent chacune un passage d'air 100, 102, les passages d'airs 100, 102 opposés permettant à un flux d'air de traverser le bac de la partie inférieure 34 pour refroidir les unités 20 de stockage d'énergie montées en série.

Au moins un passage d'air 100 d'une des parois transversales verticales est composé d'une ouverture pratiquée dans ladite paroi transversale 62 verticale à laquelle est abouchée une cloche 104 de circulation d'air dont une cavité interne 106 reçoit intérieurement au moins un motoventilateur 108 et dont un conduit externe 110 est destiné à être relié à un conduit d'arrivée d'air frais (non représenté) du véhicule associé.

Par ailleurs, comme l'illustrent les figures 7 et 8 pour former les moyens de refroidissement supérieurs, le couvercle 54 du second bac 48 de la partie supérieure 36 comporte une pluralité d'ailettes 112, par exemple parallèles d'orientation longitudinale d'une hauteur déterminée, et au moins un bord 114 de la cavité interne 106 de la cloche 104 de circulation fait saillie au niveau de l'extrémité supérieure des ailettes 112 pour permettre à un flux d'air de traverser au moins partiellement les ailettes 112.

Le couvercle 54 est fixé à la partie inférieure par exemple par des vis 131. Ce couvercle 54 est dans un mode de réalisation métallique, par exemple en aluminium, pour mieux évacuer la chaleur.

De préférence, pour limiter les turbulences de l'air qui est dirigé sur les ailettes, un volet 116 faisant saillie horizontale à partir du second bac 48 s'étend à l'intérieur de la cavité 106 de la cloc104 de circulation pour guider l'air entre le motoventilateur 108 et les ailettes 112.

Il est possible d'envisager au moins deux variantes des moyens de refroidissement à air 14.

Selon une première variante du second mode de réalisation qui a été représenté aux figures 5 et 7, seule un des passages d'air 100 d'une des parois verticales transversales 62 reçoit une cloche 104 de circulation d'air et la paroi transversale 62 verticale opposée comporte une grille d'évacuation d'air.

Selon une première variante du second mode de réalisation qui a été représenté à la figure 8, les deux passages d'air 100 et 102 des parois 62 transversales verticales opposées sont composés chacun d'une ouverture à laquelle est abouchée une cloche 104 de circulation d'air qui est munie d'au moins un motoventilateur 108 respectivement soufflant ou aspirant, un bord 114 de la cavité interne 106 de chaque cloche 104 s'étendant en regard des ailettes 112 et un conduit externe 110 étant destiné à être relié à un conduit (non représenté) d'arrivée d'air frais ou d'évacuation d'air chaud du véhicule associé pour alimenter ou évacuer l'air dans le bac inférieur 34 et entre les ailettes 112.

Dans cette dernière configuration, il est possible d'améliorer encore le refroidissement des ailettes 112 en prévoyant une paroi de guidage (non représentée), composée par exemple d'une tôle rapportée s'étend au dessus des extrémités des ailettes 112 pour guider le flux d'air entre les ailettes 112.

Il sera compris que quel que soit le mode de réalisation envisagé, il est essentiel que la chaleur dégagée par les unités de stockage 20 puisse être transmise au boîtier 32, et que ce boîtier ne puisse être déformé par ladite chaleur. A cet effet, quel que soit le mode de réalisation envisagé, le boîtier 32 est de préférence réalisé par moulage d'un alliage d'aluminium.

Enfin, le boîtier 32 est de préférence notamment sensiblement de la taille d'une batterie standard de véhicule automobile, ceci afin de permettre l'implantation du dispositif 10 en lieu et place d'une batterie conventionnelle, d'une part dans le cas de l'adaptation d'un véhicule à motorisation thermique à une motorisation électrique et/ou hybride, et d'autre part pour limiter l'encombrement et le poids d'un tel dispositif, notamment pour satisfaire aux normes de sécurité anti-collision.

L'invention propose donc un dispositif d'alimentation électrique pour un véhicule automobile qui est à la fois compact et innovant.

Cette solution compacte permet ainsi de réduire les inductances de liaison (notamment entre l'onduleur et le convertisseur continu-continu, ou encore entre l'onduleur et les supercondensateurs) qui produisent des ondulations de tension et de résonance entre les différents éléments et des décalages de masse pour les signaux à communiquer entre les différents équipements.

Le fait de réduire les inductances de liaison, permet également de réduire le phénomène d'avalanche au niveau de l'onduleur, phénomène bien connu de l'homme du métier qui peut produire des problèmes thermiques.

En outre, cette solution compacte évite d'avoir les inconvénients d'une conception éclatée de ce type de dispositifs d'alimentation électrique, conception éclatée qui implique une multiplication des boîtiers électroniques dans le véhicule, et par conséquent une multiplication des impératifs d'étanchéité et de refroidissement pour chaque boîtier, et en de nombreux problèmes de câblage dans le véhicule et de tenue des connexions.

Ainsi, on améliore l'intégration et l'encombrement des unités de stockages, des convertisseurs et de l'interrupteur dans le véhicule, ainsi que leur comportement thermique et électrique durant le fonctionnement du dispositif.

Bien entendu la présente invention n'est pas limitée aux exemples de réalisation décrits, toutes les combinaisons étant possibles.

Par exemple les moyens inférieurs de refroidissement peuvent être des moyens de refroidissement par air comme dans les figures 5 à 8 et les moyens supérieurs de refroidissement des moyens de refroidissement par fluide comme dans les figures 2 à 4.

Un seul moyen de refroidissement inférieur ou supérieur peut être prévu en association avec le matériau thermorégulateur.

## Revendications

1. Dispositif (10) d'alimentation électrique pour un véhicule automobile qui est monté dans le véhicule automobile et qui est destiné à relier au moins une machine électrique (12), susceptible de fonctionner en moteur électrique et/ou en générateur électrique, à une batterie (16) du véhicule,
**caractérisé en ce qu'**il comporte un boîtier unique (32) comportant des moyens de refroidissement et comprenant une partie inférieure (34) formant un bac de réception d'au moins une unité de stockage d'énergie électrique(20),
**en ce que** le boîtier (32) comporte:
- une partie inférieure (34), formant un bac de réception d'une pluralité d'unités (20) de stockage d'énergie électrique,
- au moins une partie supérieure (36), coiffant la partie inférieure,
chaque partie inférieure (34) ou supérieure (36) comportant des moyens de refroidissement associés,
et **en ce que** le dispositif comporte au moins un convertisseur électronique (18,22, 30) agencé dans le boîtier unique (32).

2. Dispositif selon la revendication 1, **caractérisé en ce que** la partie supérieure (36) du boîtier (32) reçoit au moins une carte (38) électronique de commande et au moins une carte (40) électronique de puissance qui comporte le(s) convertisseur(s) électronique(s) (18, 22).

3. Dispositif (10) d'alimentation électrique selon l'une quelconque des revendications 1 ou 2, **caractérisé en ce que** :
- la partie inférieure (34) présente la forme d'un premier bac sensiblement parallélépipédique, ouvert à son extrémité supérieure (42), qui reçoit dans le sens de la longueur ou bien de la largeur ou bien de la hauteur au moins deux unités (20) de stockage d'énergie électrique dits "supercondensateurs" montées en série, et qui comporte des moyens inférieurs de refroidissement.

4. Dispositif (10) d'alimentation électrique selon la revendication précédente, **caractérisé en ce que** :
- Les unités de stockage d'énergie (20) sont disposées en étages, les unités d'un premier étage étant décalées par rapport au deuxième étage telle que deux unités du deuxième étage sont en contact tangentiel avec une même unité du premier étage.

5. Dispositif (10) d'alimentation électrique selon la revendication 3 ou 4 prise en combinaison avec la revendication 2, **caractérisé en ce que** :
- la partie supérieure (36) comporte un second bac (48) qui coiffe l'extrémité supérieure (42) du premier bac (34), qui est ouvert à son extrémité supérieure (50), et qui est destiné à recevoir successivement, du bas vers le haut du second bac (48), la carte (38) électronique de commande, un joint (52) d'isolation, et la carte électronique (40) de puissance comportant le convertisseur électronique (18, 22), et un couvercle (54) qui coiffe l'extrémité supérieure du second bac (48) et qui comporte des moyens supérieurs de refroidissement.

6. Dispositif (10) d'alimentation électrique selon l'une quelconque des revendications 1 à 5, **caractérisé en ce que** les moyens inférieurs/supérieurs de refroidissement d'au moins une partie inférieure/supérieure (34, 36) sont des moyens de refroidissement par fluide.

7. Dispositif (10) d'alimentation électrique selon l'une quelconque des revendications 1 à 6, **caractérisé en ce que** les unités (20) de stockage d'énergie électrique sont noyées dans un matériau thermorégulateur (56) tel que notamment de la paraffine

8. Dispositif (10) d'alimentation électrique selon la revendication 6 ou 7, **caractérisé en ce que** pour former les moyens inférieurs de refroidissement, le premier bac (34) de la partie inférieure comporte des parois longitudinales (58), dans l'épaisseur desquelles sont agencés une pluralité de conduits (60) longitudinaux destinés à être traversés par un fluide de refroidissement, et des parois transversales verticales (62) dans l'épaisseur de chacune desquelles est formée une cavité (64) qui communique au moins :
• avec l'ensemble des extrémités associées des conduits (60) des parois (58) longitudinales,
• avec un premier conduit (66, 68) associé d'alimentation ou bien d'évacuation de liquide de refroidissement dont une buse (70, 72) fait saillie sur la face extérieure de chaque paroi (62) transversale.

9. Dispositif (10) d'alimentation électrique selon la revendication 8, **caractérisé en ce que** pour former les moyens de refroidissement supérieurs, le couvercle (54) de la partie supérieure (36) comporte dans son épaisseur une cavité (74) longitudinale et transversale qui est destinée à être traversée par le fluide de refroidissement, et qui communique à ses extrémités avec des deuxièmes conduits (80, 82) associés d'alimentation et d'évacuation du fluide de refroidissement.

10. Dispositif d'alimentation électrique selon la revendication 9, **caractérisé en ce que** chaque cavité (64) de chaque paroi (62) transversale du premier bac de la partie inférieure (34) communique avec un troisième conduit (84, 86) qui communique avec le deuxième conduit (80, 82) associé du couvercle (54) de la partie supérieure (36), pour permettre une alimentation et une évacuation unique des conduits (60) de la partie inférieure (34) et de la cavité (74) du couvercle (54) par l'intermédiaire des buses (70, 72) de la partie inférieure (34).

11. Dispositif (10) d'alimentation électrique selon la revendication précédente, **caractérisé en ce que** le troisième conduit (84, 86) communique avec le deuxième conduit (80, 82) par l'intermédiaire d'un tube (90, 88).

12. Dispositif (10) d'alimentation électrique selon la revendication précédente, **caractérisé en ce que** le tube (90) est indépendant et **en ce qu'**il est reçu d'une part directement dans un alésage du premier bac formant le troisième conduit (84, 86) et d'autre part dans un manchon (92) en matériau élastomère reçu dans un alésage du couvercle (54) formant le deuxième conduit (80, 82), notamment pour assurer l'étanchéité au liquide de refroidissement sous pression.

13. Dispositif (10) d'alimentation électrique selon l'une quelconque des revendications 1 à 5 et 7, **caractérisé en ce que** les moyens de refroidissement inférieurs/supérieurs d'au moins une partie inférieure/supérieure (34, 36) sont des moyens de refroidissement à air.

14. Dispositif (10) d'alimentation électrique selon la revendication précédente, **caractérisé en ce que**, pour former les moyens de refroidissement inférieurs, le premier bac (34) de la partie inférieure comporte des parois (62) transversales opposées qui comportent chacune un passage d'air (100, 102), les passages d'airs opposés (100, 102) permettant à un flux d'air de traverser le bac (34) pour refroidir les unités (20) de stockage d'énergie montées en série, et **en ce qu'**au moins un passage d'air (100) d'une des parois transversales (62) est composé d'une ouverture pratiquée dans ladite paroi transversale (62) à laquelle est abouchée une cloche (104) de circulation d'air dont une cavité interne (106) reçoit intérieurement au moins un motoventilateur (108) et dont un conduit externe (110) est destiné à être relié à un conduit d'arrivée d'air frais du véhicule associé.

15. Dispositif (10) d'alimentation électrique selon la revendication 13 ou 14, **caractérisé en ce que**, pour former les moyens de refroidissement supérieurs, le couvercle (54) du second bac de la partie supérieure comporte une pluralité d'ailettes (112) et **en ce que** au moins un bord (114) de la cavité interne (106) de la cloche (104) de circulation fait saillie au niveau de l'extrémité supérieure des ailettes (112) pour permettre à un flux d'air de traverser au moins partiellement les ailettes (112).

16. Dispositif (10) d'alimentation électrique selon la revendication précédente, **caractérisé en ce qu'**un volet (116) faisant saillie horizontale à partir du second bac (48) s'étend à l'intérieur de la cavité de la cloche (104) de circulation pour guider l'air entre le motoventilateur (108) et les ailettes (112).

17. Dispositif (10) d'alimentation électrique selon l'une quelconque des revendications 14 à 16, **caractérisé en ce que** seul un des passages d'air (100) des parois transversales reçoit une cloche (104) de circulation d'air et **en ce que** la paroi transversale opposée (62) comporte une grille d'évacuation d'air.

18. Dispositif (10) d'alimentation électrique selon quelconque des revendications 14 à 17, **caractérisé en ce que** les deux passages d'air (100, 102) des parois (62) transversales opposées sont composés chacun d'une ouverture à laquelle est abouchée une cloche (104) de circulation d'air qui est munie d'au moins un motoventilateur (108) respectivement soufflant ou aspirant, un bord (114) de la cavité interne (106) de chaque cloche (104) s'étendant en regard des ailettes (112) et un conduit externe (110) étant destiné à être relié à un conduit d'arrivée d'air frais ou d'évacuation d'air chaud du véhicule associé pour alimenter ou évacuer l'air dans le bac inférieur (34) et entre les ailettes (112).

19. Dispositif (10) d'alimentation électrique selon la revendication précédente, **caractérisé en ce qu'**une paroi de guidage s'étend au dessus des extrémités des ailettes (112) pour guider le flux d'air entre les ailettes (112).

## Patentansprüche

1. Stromversorgungsvorrichtung (10) für ein Kraftfahrzeug, welche in dem Kraftfahrzeug angebracht ist und welche dazu bestimmt ist, wenigstens eine elektrische Maschine (12), die dazu eingerichtet ist, als Elektromotor und/oder als Stromgenerator zu arbeiten, mit einer Batterie (16) des Fahrzeugs zu verbinden,
**dadurch gekennzeichnet, dass** sie ein einziges Gehäuse (32) aufweist, das Kühlmittel aufweist und einen unteren Teil (34) umfasst, der einen Aufnahmebehälter für wenigstens eine Speichereinheit für elektrische Energie (20) bildet,
dadurch, dass das Gehäuse (32) aufweist:
- einen unteren Teil (34), der einen Aufnahmebehälter für mehrere Speichereinheiten für elektrische Energie (20) bildet,
- wenigstens einen oberen Teil (36), der den unteren Teil bedeckt,
wobei der untere (34) und der obere Teil (36) jeweils zugeordnete Kühlmittel aufweisen,
und dadurch, dass die Vorrichtung wenigstens einen elektronischen Wandler (18, 22, 30) aufweist, der in dem einzigen Gehäuse (32) angeordnet ist.

2. Vorrichtung nach Anspruch 1, **dadurch gekennzeichnet, dass** der obere Teil (36) des Gehäuses (32) wenigstens eine Steuerplatine (38) und wenigstens eine Leistungsplatine (40), welche den (die) elektronischen Wandler (18, 22) trägt, aufnimmt.

3. Stromversorgungsvorrichtung (10) nach einem der Ansprüche 1 oder 2, **dadurch gekennzeichnet, dass**:
- der untere Teil (34) die Form eines an seinem oberen Ende (42) offenen, im Wesentlichen quaderförmigen ersten Behälters aufweist, welcher in der Richtung der Länge oder auch der Breite oder auch der Höhe wenigstens zwei in Reihe geschaltete Speichereinheiten für elektrische Energie (20), sogenannte "Superkondensatoren", aufnimmt und welcher untere Kühlmittel aufweist.

4. Stromversorgungsvorrichtung (10) nach dem vorhergehenden Anspruch, **dadurch gekennzeichnet, dass**:
- die Energiespeichereinheiten (20) in Schichten angeordnet sind, wobei die Einheiten einer ersten Schicht in Bezug auf die zweite Schicht derart versetzt sind, dass sich zwei Einheiten der zweiten Schicht in tangentialem Kontakt mit ein und derselben Einheit der ersten Schicht befinden.

5. Stromversorgungsvorrichtung (10) nach Anspruch 3 oder 4 in Verbindung mit Anspruch 2, **dadurch gekennzeichnet, dass**:
- der obere Teil (36) einen zweiten Behälter (48), welcher das obere Ende (42) des ersten Behälters (34) bedeckt, an seinem oberen Ende (50) offen ist und dazu bestimmt ist, nacheinander, von unten nach oben im zweiten Behälter (48), die Steuerplatine (38), eine Isolationsdichtung (52) und die den elektronischen Wandler (18, 22) aufweisende Leistungsplatine (40) aufzunehmen, und eine Abdeckung (54), welche das obere Ende des zweiten Behälters (48) bedeckt und welche obere Kühlmittel aufweist, umfasst.

6. Stromversorgungsvorrichtung (10) nach einem der Ansprüche 1 bis 5, **dadurch gekennzeichnet, dass** die unteren/oberen Kühlmittel wenigstens eines unteren/oberen Teils (34, 36) Fluidkühlmittel sind.

7. Stromversorgungsvorrichtung (10) nach einem der Ansprüche 1 bis 6, **dadurch gekennzeichnet, dass** die Speichereinheiten für elektrische Energie (20) in ein wärmeregulierendes Material (56), wie insbesondere Paraffin, eingebettet sind.

8. Stromversorgungsvorrichtung (10) nach Anspruch 6 oder 7, **dadurch gekennzeichnet, dass**, um die unteren Kühlmittel zu bilden, der erste Behälter (34) des unteren Teils Längswände (58) aufweist, in deren Dicke mehrere Längsleitungen (60) angeordnet sind, die dazu bestimmt sind, von einem Kühlfluid durchströmt zu werden, sowie vertikale Querwände (62), in deren Dicke jeweils ein Hohlraum (64) ausgebildet ist, welcher wenigstens in Verbindung steht:
• mit sämtlichen zugeordneten Enden der Leitungen (60) der Längswände (58),
• mit einer zugeordneten ersten Leitung (66, 68) zur Zuführung oder auch zum Ablassen von Kühlflüssigkeit, von der eine Düse (70, 72) zur Außenseite der jeweiligen Querwand (62) hin vorsteht.

9. Stromversorgungsvorrichtung (10) nach Anspruch 8, **dadurch gekennzeichnet, dass**, um die oberen Kühlmittel zu bilden, die Abdeckung (54) des oberen Teils (36) in ihrer Dicke einen längs und quer verlaufenden Hohlraum (74) aufweist, welcher dazu bestimmt ist, von dem Kühlfluid durchströmt zu werden, und welcher an seinen Enden mit zugeordneten zweiten Leitungen (80, 82) zur Zuführung und zum Ablassen des Kühlfluids in Verbindung steht.

10. Stromversorgungsvorrichtung nach Anspruch 9, **dadurch gekennzeichnet, dass** jeder Hohlraum (64) jeder Querwand (62) des ersten Behälters des unteren Teils (34) mit einer dritten Leitung (84, 86) in Verbindung steht, welche mit der zweiten Leitung (80, 82) in Verbindung steht, die dem Deckel (54) des oberen Teils (36) zugeordnet ist, um eine einzige Versorgung und Entleerung der Leitungen (60) des unteren Teils (34) und des Hohlraums (74) der Abdeckung (54) über die Düsen (70, 72) des unteren Teils (34) zu ermöglichen.

11. Stromversorgungsvorrichtung (10) nach dem vorhergehenden Anspruch, **dadurch gekennzeichnet, dass** die dritte Leitung (84, 86) mit der zweiten Leitung (80, 82) über ein Rohr (90, 88) in Verbindung steht.

12. Stromversorgungsvorrichtung (10) nach dem vorhergehenden Anspruch, **dadurch gekennzeichnet, dass** das Rohr (90) unabhängig ist, und dadurch, dass es einerseits direkt in einer Bohrung des ersten Behälters aufgenommen ist, welche die dritte Leitung (84, 86) bildet, und andererseits in einer Hülse (92) aus Elastomermaterial, die in einer Bohrung der Abdeckung (54) aufgenommen ist, welche die zweite Leitung (80, 82) bildet, insbesondere um die Dichtigkeit gegenüber der unter Druck stehenden Kühlflüssigkeit sicherzustellen.

13. Stromversorgungsvorrichtung (10) nach einem der Ansprüche 1 bis 5 und 7, **dadurch gekennzeichnet, dass** die unteren/oberen Kühlmittel wenigstens eines unteren/oberen Teils (34, 36) Luftkühlmittel sind.

14. Stromversorgungsvorrichtung (10) nach dem vorhergehenden Anspruch, **dadurch gekennzeichnet, dass**, um die unteren Kühlmittel zu bilden, der erste Behälter (34) des unteren Teils einander gegenüberliegende Querwände (62) aufweist, welche jeweils einen Luftdurchlass (100, 102) aufweisen, wobei die einander gegenüberliegenden Luftdurchlässe (100, 102) ermöglichen, dass ein Luftstrom den Behälter (34) durchströmt, um die in Reihe geschalteten Energiespeichereinheiten (20) zu kühlen, und dadurch, dass wenigstens ein Luftdurchlass (100) einer der Querwände (62) aus einer in dieser Querwand (62) hergestellten Öffnung besteht, an welche eine Luftzirkulationshaube (104) angefügt ist, von der ein innerer Hohlraum (106) innen wenigstens ein Motorgebläse (108) aufnimmt und von der eine äußere Leitung (110) dazu bestimmt ist, mit einer Frischluftzufuhrleitung des zugeordneten Fahrzeugs verbunden zu werden.

15. Stromversorgungsvorrichtung (10) nach Anspruch 13 oder 14, **dadurch gekennzeichnet, dass**, um die oberen Kühlmittel zu bilden, die Abdeckung (54) des zweiten Behälters des oberen Teils mehrere Rippen (112) aufweist, und dadurch, dass wenigstens ein Rand (114) des inneren Hohlraums (106) der Zirkulationshaube (104) im Bereich des oberen Endes der Rippen (112) vorsteht, um zu ermöglichen, dass ein Luftstrom wenigstens teilweise die Rippen (112) durchströmt.

16. Stromversorgungsvorrichtung (10) nach dem vorhergehenden Anspruch, **dadurch gekennzeichnet, dass** eine Klappe (116), die vom zweiten Behälter (48) aus horizontal vorsteht, sich ins Innere des Hohlraums der Zirkulationshaube (104) hinein erstreckt, um die Luft zwischen dem Motorgebläse (108) und den Rippen (112) zu leiten.

17. Stromversorgungsvorrichtung (10) nach einem der Ansprüche 14 bis 16, **dadurch gekennzeichnet, dass** nur einer der Luftdurchlässe (100) der Querwände eine Luftzirkulationshaube (104) aufnimmt, und dadurch, dass die gegenüberliegende Querwand (62) ein Luftauslassgitter aufweist.

18. Stromversorgungsvorrichtung (10) nach einem der Ansprüche 14 bis 17, **dadurch gekennzeichnet, dass** die zwei Luftdurchlässe (100, 102) der einander gegenüberliegenden Querwände (62) jeweils aus einer Öffnung bestehen, an welche eine Luftzirkulationshaube (104) angefügt ist, welche mit wenigstens einem einblasenden bzw. absaugenden Motorgebläse (108) ausgestattet ist, wobei sich ein Rand (114) des inneren Hohlraums (106) jeder Haube (104) gegenüber den Rippen (112) erstreckt und eine äußere Leitung (110) dazu bestimmt ist, mit einer Frischluftzufuhr- oder Heißluftauslassleitung des zugeordneten Fahrzeugs verbunden zu werden, um die Luft im unteren Behälter (34) und zwischen den Rippen (112) zuzuführen oder abzuführen.

19. Stromversorgungsvorrichtung (10) nach dem vorhergehenden Anspruch, **dadurch gekennzeichnet, dass** sich eine Leitwand oberhalb der Enden der Rippen (112) erstreckt, um den Luftstrom zwischen den Rippen (112) zu leiten.

## Claims

1. Electric power supply device (10) for a motor vehicle which is mounted in the motor vehicle and which is intended to link at least one electric machine (12), capable of operating as electric motor and/or as electric generator, to a battery (16) of the vehicle,
**characterized in that** it comprises a single housing (32) including cooling means and comprising a bottom part (34) forming a tray for receiving at least one electric energy storage unit (20),
**in that** the housing (32) comprises:
- a bottom part (34), forming a tray for receiving a plurality of electric energy storage units (20),
- at least one top part (36), capping the bottom part,
each bottom (34) or top (36) part including associated cooling means,
and **in that** the device comprises at least one electronic converter (18, 22, 30) arranged in the single housing (32).

2. Device according to Claim 1, **characterized in that** the top part (36) of the housing (32) receives at least one control electronic circuit board (38) and at least one power electronic circuit board (40) which includes the electronic converter(s) (18, 22).

3. Electric power supply device (10) according to either one of Claims 1 and 2, **characterized in that**:
- the bottom part (34) takes the form of a first substantially parallelepipedal tray, open at its top end (42), which receives, lengthwise or else widthwise or else heightwise, at least two electric energy storage units (20) called "supercapacitors" mounted in series, and which includes bottom cooling means.

4. Electric power supply device (10) according to the preceding claim, **characterized in that**:
- the energy storage units (20) are arranged in stages, the units of a first stage being offset relative to the second stage such that two units of the second stage are in tangential contact with a same unit of the first stage.

5. Electric power supply device (10) according to Claim 3 or 4 taken in combination with Claim 2, **characterized in that**:
- the top part (36) comprises a second tray (48) which caps the top end (42) of the first tray (34), which is open at its top end (50), and which is intended to receive, in succession from bottom to top of the second tray (48), the control electronic circuit board (38), an insulating seal (52) and the power electronic circuit board (40) including the electronic converter (18, 22), and a cover (54) which caps the top end of the second tray (48) and which includes top cooling means.

6. Electric power supply device (10) according to any one of Claims 1 to 5, **characterized in that** the bottom/top cooling means of at least a bottom/top part (34, 36) are fluid cooling means.

7. Electric power supply device (10) according to any one of Claims 1 to 6, **characterized in that** the electric energy storage units (20) are embedded in a heat-regulating material (56) such as, in particular, paraffin.

8. Electric power supply device (10) according to Claim 6 or 7, **characterized in that** to form the bottom cooling means, the first tray (34) of the bottom part comprises longitudinal walls (58), in the thickness of which are arranged a plurality of longitudinal ducts (60) intended to be passed through by a coolant, and vertical transverse walls (62) in the thickness of each of which is formed a cavity (64) which communicates at least:
• with all of the associated ends of the ducts (60) of the longitudinal walls (58),
• with a first associated coolant supply or else discharge duct (66, 68) a nozzle (70, 72) of which protrudes on the outer face of each transverse wall (62).

9. Electric power supply device (10) according to Claim 8, **characterized in that** to form the top cooling means, the cover (54) of the top part (36) includes in its thickness a longitudinal and transverse cavity (74) which is intended to be passed through by the discharge coolant, and which communicates at its ends with second associated coolant supply and ducts (80, 82).

10. Electric power supply device according to Claim 9, **characterized in that** each cavity (64) of each transverse wall (62) of the first tray of the bottom part (34) communicates with a third duct (84, 86) which communicates with the associated second duct (80, 82) of the cover (54) of the top part (36), to allow a single supply and discharge of the ducts (60) of the bottom part (34) and of the cavity (74) of the cover (54) via the nozzles (70, 72) of the bottom part (34).

11. Electric power supply device (10) according to the preceding claim, **characterized in that** the third duct (84, 86) communicates with the second duct (80, 82) via a tube (90, 88).

12. Electric power supply device (10) according to the preceding claim, **characterized in that** the tube (90) is independent and **in that** it is received on the one hand directly in a bore of the first tray forming the third duct (84, 86) and on the other hand in a sleeve (92) made of elastomer material received in a bore of the cover (54) forming the second duct (80, 82), in particular to ensure the tightness to the coolant under pressure.

13. Electric power supply device (10) according to any one of Claims 1 to 5 and 7, **characterized in that** the bottom/top cooling means of at least a bottom/top part (34, 36) are air cooling means.

14. Electric power supply device (10) according to the preceding claim, **characterized in that**, to form the bottom cooling means, the first tray (34) of the bottom part comprises opposite transverse walls (62) which each include an air passage (100, 102), the opposite air passages (100, 102) allowing a flow of air to pass through the tray (34) to cool the energy storage units (20) mounted in series, and **in that** at least one air passage (100) of one of the transverse walls (62) is composed of an opening formed in said transverse wall (62) to which is butt-welded an air circulation bell (104) of which an internal cavity (106) internally receives at least one motor fan (108) and of which an outer duct (110) is intended to be linked to a cool air intake duct of the associated vehicle.

15. Electric power supply device (10) according to Claim 13 or 14, **characterized in that**, to form the top cooling means, the cover (54) of the second tray of the top part comprises a plurality of fins (112) and **in that** at least one edge (114) of the internal cavity (106) of the circulation bell (104) protrudes at the top end of the fins (112) to allow a flow of air to pass at least partially through the fins (112).

16. Electric power supply device (10) according to the preceding claim, **characterized in that** a flap (116) protruding horizontally from the second tray (48) extends into the cavity of the circulation bell (104) to guide the air between the motor fan (108) and the fins (112).

17. Electric power supply device (10) according to any one of Claims 14 to 16, **characterized in that** only one of the air passages (100) of the transvers walls receives an air circulation bell (104) and **in that** the opposite transverse wall (62) includes an air discharge grating.

18. Electric power supply device (10) according to any one of Claims 14 to 17, **characterized in that** the two air passages (100, 102) of the opposite transverse walls (62) are each composed of an opening to which is butt-welded an air circulation bell (104) which is provided with at least a respectively blowing or sucking motor fan (108), an edge (114) of the internal cavity (106) of each bell (104) extending facing the fins (112) and an outer duct (110) being intended to be linked to a cool air intake or hot air discharge duct of the associated vehicle to supply or discharge the air in the bottom tray (34) and between the fins (112).

19. Electric power supply device (10) according to the preceding claim, **characterized in that** a guiding wall extends above the ends of the fins (112) to guide the flow of air between the fins (112).
